(19) Europäisches Patentamt

European Patent Office

Office européen des brevets

(11) **EP 3 023 247 B1**

(12) **EUROPEAN PATENT SPECIFICATION**

(45) Date of publication and mention of the grant of the patent:
**07.12.2022 Bulletin 2022/49**

(21) Application number: **14827117.4**

(22) Date of filing: **26.06.2014**

(51) International Patent Classification (IPC):
**B32B 25/10** (2006.01)   **B32B 27/20** (2006.01)
**B32B 27/30** (2006.01)   **B32B 27/34** (2006.01)
**B32B 27/36** (2006.01)   **B32B 27/40** (2006.01)

(52) Cooperative Patent Classification (CPC):
**B32B 5/022; B32B 27/12; B32B 27/20;**
**B32B 27/302; B32B 27/304; B32B 27/327;**
**B32B 27/34; B32B 27/36; B32B 27/40;**
B32B 2250/03; B32B 2250/40; B32B 2262/0246;
B32B 2262/0253; B32B 2262/0261;
B32B 2262/0292;                    (Cont.)

(86) International application number:
**PCT/JP2014/066947**

(87) International publication number:
**WO 2015/008595 (22.01.2015 Gazette 2015/03)**

(54) **STRETCHABLE LAMINATE AND ARTICLE CONTAINING SAME**

DEHNBARES LAMINAT UND ARTIKEL DAMIT

STRATIFIÉ EXTENSIBLE ET ARTICLE CONTENANT UN TEL STRATIFIÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **18.07.2013 JP 2013149237**

(43) Date of publication of application:
**25.05.2016 Bulletin 2016/21**

(73) Proprietor: **Nitto Denko Corporation**
**Ibaraki-shi, Osaka 567-8680 (JP)**

(72) Inventors:
• **IKISHIMA, Shinsuke**
  **Ibaraki-shi, Osaka 567-8680 (JP)**
• **SUZUKI, Tatsuya**
  **Ibaraki-shi, Osaka 567-8680 (JP)**
• **AZUKIZAWA Makoto**
  **Ibaraki-shi, Osaka 567-8680 (JP)**

(74) Representative: **Müller-Boré & Partner**
**Patentanwälte PartG mbB**
**Friedenheimer Brücke 21**
**80639 München (DE)**

(56) References cited:
WO-A1-2012/038613   JP-A- H0 978 435
JP-A- H1 148 410    JP-A- H06 502 355
JP-A- H07 252 762   JP-A- H09 300 504
JP-A- H10 165 439   JP-A- 2000 080 553
JP-A- 2001 501 883   JP-A- 2005 511 345
JP-A- 2007 530 170   JP-A- 2010 136 788
JP-A- 2012 187 857   JP-A- 2012 521 239
JP-A- 2013 525 547   US-A1- 2009 264 844
US-A1- 2010 081 352   US-A1- 2010 222 755

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2262/04; B32B 2262/12; B32B 2262/14;
B32B 2270/00; B32B 2307/51; B32B 2555/02

**Description**

Technical Field

The present invention relates to a stretchable laminate and an article including the stretchable laminate.

Background Art

Various stretchable laminates are proposed for articles such as sanitary articles, for example, diapers and masks (see, for example, Patent Literatures 1 and 2). Regarding such stretchable laminates, it is important for the laminate to have excellent fittability so as to be comfortably fitted to each of various users.
However, the related-art stretchable laminates have a problem in that such fitting feeling is not sufficient.

Citation List

Patent Literature

[PTL 1] JP 2012-187857 A
[PTL 2] JP 3830818 B2

Further, US 2009/264844 A1 describes an absorbent article comprising a topsheet, an outer cover, and an absorbent core disposed therebetween, wherein the outer cover may comprise an extrusion bonded laminate comprising a multi-layer coextruded elastomeric film and a nonwoven. US 2010/081352 A1 describes a process for forming a multilayer construction, the multilayer construction including at least one layer of an elastic meltblown fabric produced by extruding one or more polyolefin polymer having a MFR from less than 90 g/10 min through at least one die having a plurality of nozzles to form a plurality of continuous fibers, at least one die operating at a melt pressure from greater than 3.45 MPa. US 2010/222755 A1 describes a meltspun laminate comprising two or more layers of meltspun fabrics, wherein layers that are adjacent to one another are in situ entangled with one another to define an interfacial region of mixed fibers between the layers.

Summary of Invention

Technical Problem

The present invention has been made to solve the problem of the related art, and an object of the present invention is to provide a stretchable laminate having excellent fittability. Another object of the present invention is to provide an article including such stretchable laminate.

Solution to Problem

A stretchable laminate according to the present invention is a stretchable laminate as characterized in claim 1, including: an elastomer layer; and a non-woven fabric layer arranged on at least one side of the elastomer layer, the stretchable laminate having a permanent set after a hysteresis test is performed four times of 10% or less, wherein the elastomer layer comprises an elastomer resin as a main component, and the content of the elastomer resin in the elastomer layer is from 90 wt% to 100 wt%, wherein the elastomer layer is an elastic film, wherein the elastomer layer comprises an olefin-based elastomer, and wherein the olefin-based elastomer has a MFR of from 5.0 g/10 min to 25.0 g/10 min.
In a preferred embodiment, the olefin-based elastomer has a density of from 0.890 $g/cm^3$ to 0.830 $g/cm^3$.
In a preferred embodiment, the olefin-based elastomer includes an $\alpha$-olefin-based elastomer.
In a preferred embodiment, the $\alpha$-olefin-based elastomer includes any one selected from an ethylene-based elastomer, a propylene-based elastomer, and a 1-butene-based elastomer.
In a preferred embodiment, the $\alpha$-olefin-based elastomer includes a propylene-based elastomer.
In a preferred embodiment, the $\alpha$-olefin-based elastomer is produced by using a metallocene catalyst.
In a preferred embodiment, the olefin-based elastomer includes a blend of two or more kinds of olefin-based elastomers.
An article according to the present invention includes the stretchable laminate according to the present invention.

Brief Description of Drawings

FIG. 1 is a schematic cross-sectional view of a stretchable laminate according to the preferred embodiment of a present invention.

FIG. 2 is a schematic view for illustrating another stretchable laminate according to a preferred embodiment of the present invention.

FIG. 3 is a schematic view of a state in which a non-woven fabric is coated with a hot-melt pressure-sensitive adhesive in a striped manner in a flow direction of a production line as viewed from a top surface thereof.

Description of Embodiments

<<<<Stretchable Laminate>>>>

A stretchable laminate of the present invention is a stretchable laminate including a non-woven fabric layer on at least one side of an elastomer layer. The stretchable laminate of the present invention may include any appropriate other layer to the extent that the effect of the present invention is not impaired as long as the stretchable laminate includes a non-woven fabric layer on at least one side of the elastomer layer. The number of such any appropriate other layers may be only one, or may be two or more.

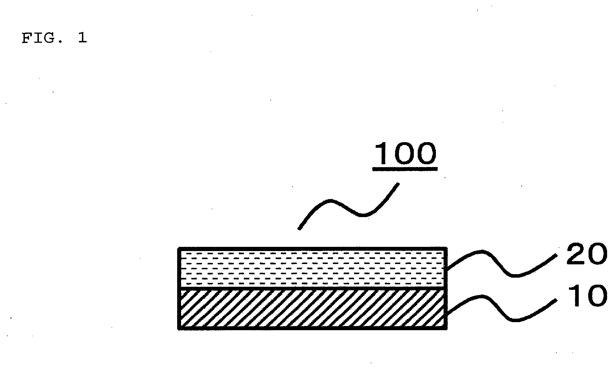

FIG. 1 is a schematic cross-sectional view of a stretchable laminate according to a preferred embodiment of the present invention. A stretchable laminate 100 illustrated in FIG. 1 includes an elastomer layer 10 and a non-woven fabric layer 20 arranged on only one side of the elastomer layer 10. A material for bonding the elastomer layer 10 and the non-woven fabric layer 20 may be present therebetween. Examples of such material include an adhesive, a pressure-sensitive adhesive, and a hot-melt pressure-sensitive adhesive.

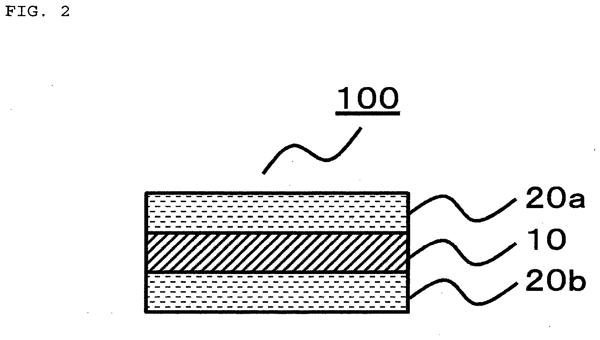

FIG. 2 is a schematic cross-sectional view of another stretchable laminate according to a preferred embodiment of the present invention. A stretchable laminate 100 illustrated in FIG. 2 includes an elastomer layer 10, a non-woven fabric layer 20a arranged on one side of the elastomer layer 10, and a non-woven fabric layer 20b arranged on the elastomer layer 10 on an opposite side to the non-woven fabric layer 20a. A material for bonding the elastomer layer 10 and the non-woven fabric layer 20a and/or for bonding the elastomer layer 10 and the non-woven fabric layer 20b may be present therebetween. Examples of such material include an adhesive, a pressure-sensitive adhesive, and a hot-melt pressure-sensitive adhesive.

The stretchable laminate of the present invention has a permanent set after a hysteresis test is performed four times of 10% or less, preferably 9% or less, more preferably 8% or less, still more preferably 7% or less, particularly preferably 6% or less. When the permanent set after a hysteresis test is performed four times falls within the range described above, the laminate has an excellent elastic recovery property and a low permanent set when stretching after the laminate was elongated by a user, and hence a stretchable laminate having excellent fittability can be provided. Details of the hysteresis test are described later.

The thickness of the stretchable laminate of the present invention varies depending on the thickness of the elastomer layer or the thickness of the non-woven fabric layer and is preferably from 1.0 mm to 0.1 mm, more preferably from 0.8 mm to 0.15 mm, still more preferably from 0.6 mm to 0.15 mm, particularly preferably from 0.5 mm to 0.2 mm, most preferably from 0.45 mm to 0.2 mm. When the thickness of the stretchable laminate of the present invention falls within such range, the laminate can be easily used as a material used in articles such as sanitary articles, for example, diapers and masks.

<<Elastomer Layer>>

As the elastomer layer, any appropriate elastomer layer may be adopted to the extent that the effect of the present invention is not impaired and in that the elastomer layer comprises an elastomer resin serving as a main component, wherein the elastomer layer comprises an olefin-based elastomer having a MFR of from 5.0 g/10 min to 25.0 g/10 min.

The content of the elastomer resin serving as a main component in the elastomer layer is from 90 wt% to 100 wt%, preferably from 95 wt% to 100 wt%, most preferably from 98 wt% to 100 wt%. When the content of the elastomer resin serving as a main component in the elastomer layer falls within the range described above, the elastomer layer can exhibit a sufficient elastomer characteristic.

The number of the elastomer layers may be one, or may be two or more.

In the present invention, the elastomer resin serving as a main component in the elastomer layer is an olefin-based elastomer. When the olefin-based elastomer is adopted as the elastomer resin, the heat stability is enhanced compared to any other elastomer resin (for example, a styrene-based elastomer), and hence, for example, heat deterioration during film formation in producing the stretchable laminate of the present invention can be suppressed. In addition, when the olefin-based elastomer is adopted as the elastomer resin, the storage stability is enhanced compared to any other elastomer resin (for example, a styrene-based elastomer), and hence fluctuation of values for physical properties during storage of the stretchable laminate of the present invention can be suppressed.

In addition, in the present invention, when the olefin-based elastomer is adopted as the elastomer resin, the steps in production of the elastomer layer can be simplified, and hence processing cost can be reduced. This is, for example, because when the other elastomer resin (for example, a styrene-based elastomer) is adopted as the elastomer resin, several kinds of styrene-based elastomers need to be blended with one another in order to control values for physical properties, which needs to prepare a master batch. When the olefin-based elastomer is adopted as the elastomer resin, extrusion molding can be performed by using fewer kinds of resins in production of the elastomer layer, which can obviate the need to prepare a master batch.

In the present invention, when the olefin-based elastomer is adopted as the elastomer resin, one kind of the olefin-based elastomers may be used alone, or two or more kinds thereof may be used as a blend.

Examples of the olefin-based elastomer include an olefin block copolymer, an olefin random copolymer, an ethylene copolymer, a propylene copolymer, an ethylene olefin block copolymer, a propylene olefin block copolymer, an ethylene olefin random copolymer, a propylene olefin random copolymer, an ethylene propylene random copolymer, an ethylene (1-butene) random copolymer, an ethylene (1-pentene) olefin block copolymer, an ethylene (1-hexene) random copolymer, an ethylene (1-heptene) olefin block copolymer, an ethylene (1-octene) olefin block copolymer, an ethylene (1-nonene) olefin block copolymer, an ethylene (1-decene) olefin block copolymer, a propylene ethylene olefin block copolymer, an ethylene ($\alpha$-olefin) copolymer, an ethylene ($\alpha$-olefin) random copolymer, an ethylene ($\alpha$-olefin) block copolymer, and combinations thereof.

In the present invention, the olefin-based elastomer which is adopted as the elastomer resin has a density of preferably from 0.890 g/cm$^3$ to 0.830 g/cm$^3$, more preferably from 0.888 g/cm$^3$ to 0.835 g/cm$^3$, still more preferably from 0.886 g/cm$^3$ to 0.835 g/cm$^3$, particularly preferably from 0.885 g/cm$^3$ to 0.840 g/cm$^3$, most preferably from 0.885 g/cm$^3$ to 0.845 g/cm$^3$. When the olefin-based elastomer whose density falls within the range described above is adopted, a stretchable laminate having more excellent fittability can be provided, and the heat stability is further enhanced compared to any other elastomer resin (for example, a styrene-based elastomer), and hence, for example, heat deterioration during film formation in producing the stretchable laminate of the present invention can be further suppressed. Inaddition, the storage stability is further enhanced compared to any other elastomer resin (for example, a styrene-based elastomer), and hence fluctuation of values for physical properties during storage of the stretchable laminate of the present invention can be further suppressed. Further, the steps in production of the elastomer layer can be further simplified, and hence processing cost can be further reduced.

In the present invention, the olefin-based elastomer which is adopted as the elastomer resin has a MFR of from 5.0 g/10 min to 25.0 g/10 min, preferably from 5.0 g/10 min to 23.0 g/10 min, still more preferably from 5.0 g/10 min to 21. 0 g/10 min, particularly preferably from 5.0 g/10 min to 20.0 g/10 min, most preferably from 5 . 0 g/10 min to 19.0 g/10 min. When the olefin-based elastomer whose MFR falls within the range described above is adopted, a stretchable laminate having more excellent fittability can be provided, and the heat stability is further enhanced compared to any other elastomer resin (for example, a styrene-based elastomer), and hence, for example, heat deterioration during film formation in producing the stretchable laminate of the present invention can be further suppressed. In addition, the storage stability is further enhanced compared to any other elastomer resin (for example, a styrene-based elastomer), and hence fluctuation of values for physical properties during storage of the stretchable laminate of the present invention can be further suppressed. Further, the steps in production of the elastomer layer can be further simplified, and hence processing cost can be further reduced.

In the present invention, the olefin-based elastomer which is adopted as the elastomer resin is specifically preferably an $\alpha$-olefin-based elastomer. That is, the $\alpha$-olefin-based elastomer is a copolymer of two or more kinds of $\alpha$-olefins and has elastomer characteristics. Among such $\alpha$-olefin-based elastomers, any one selected from an ethylene-based elastomer, a propylene-based elastomer, and a 1-butene-based elastomer is more preferred. When such $\alpha$-olefin-based elastomer is adopted as the olefin-based elastomer, a stretchable laminate having more excellent fittability can be provided, and the heat stability is further enhanced compared to any other elastomer resin (for example, a styrene-based elastomer), and hence, for example, heat deterioration during film formation in producing the stretchable laminate of the present invention can be further suppressed. In addition, the storage stability is further enhanced compared to any other elastomer resin (for example, a styrene-based elastomer), and hence fluctuation of values for physical properties during storage of the stretchable laminate of the present invention can be further suppressed. Further, the steps in production of the elastomer layer can be further simplified, and hence processing cost can be further reduced.

In the present invention, among the $\alpha$-olefin-based elastomers which may be adopted as the elastomer resin, a propylene-based elastomer is particularly preferred. When the propylene-based elastomer is adopted as the olefin-based elastomer, a stretchable laminate having extremely excellent fittability can be provided, and the heat stability is further enhanced compared to any other elastomer resin (for example, a styrene-based elastomer), and hence, for example, heat deterioration during film formation in producing the stretchable laminate of the present invention can be further suppressed. In addition, the storage stability is further enhanced compared to any other elastomer resin (for example, a styrene-based elastomer), and hence fluctuation of values for physical properties during storage of the stretchable laminate of the present invention can be further suppressed. Further, the steps in production of the elastomer layer can be further simplified, and hence processing cost can be further reduced.

The $\alpha$-olefin-based elastomer as described above is also available as a commercial product. Examples of such commercial product include some products in the "TAFMER" (trademark) series (such as TAFMER PN-3560) manufactured by Mitsui Chemicals, Inc., and some products in the "Vistamaxx" (trademark) series (such as Vistamaxx 6202 and Vistamaxx 3980FL) manufactured by Exxon Mobil Corporation.

In the present invention, the $\alpha$-olefin-based elastomer which may be adopted as the elastomer resin is preferably produced by using a metallocene catalyst. In the $\alpha$-olefin-based elastomer produced by using a metallocene catalyst, a stretchable laminate having extremely excellent fittability can be provided, and the heat stability is further enhanced compared to any other elastomer resin (for example, a styrene-based elastomer), and hence, for example, heat deterioration during film formation in producing the stretchable laminate of the present invention can be further suppressed. In addition, the storage stability is further enhanced compared to any other elastomer resin (for example, a styrene-based elastomer), and hence fluctuation of values for physical properties during storage of the stretchable laminate of the present invention can be further suppressed. Further, the steps in production of the elastomer layer can be further simplified, and hence processing cost can be further reduced.

The elastomer layer may contain any appropriate other component to the extent that the effect of the present invention is not impaired. Examples of such other component include any other polymer, a tackifier, a plasticizer, an antidegradant, a pigment, a dye, an antioxidant, an antistatic agent, a lubricant, a blowing agent, a heat stabilizer, a light stabilizer, an inorganic filler, and an organic filler. The number of kinds of those components may be only one, or may be two or more. The content of the other component in the elastomer layer is preferably 10 wt% or less, more preferably 7 wt% or less, still more preferably 5 wt% or less, particularly preferably 2 wt% or less, most preferably 1 wt% or less.

The thickness of the elastomer layer is preferably from 200 $\mu$m to 20 $\mu$m, more preferably from 160 $\mu$m to 30 $\mu$m, still more preferably from 140 $\mu$m to 30 $\mu$m, particularly preferably from 120 $\mu$m to 30 $\mu$m, most preferably from 100 $\mu$m to 30 $\mu$m. When the thickness of the elastomer layer falls within such range, a stretchable laminate having more excellent fittability can be provided.

In the present invention, the elastomer layer preferably has a three-layer structure, and more specifically, the layers are preferably an intermediate layer including a blend of two or more kinds of olefin-based elastomers and surface layers each including one kind of the same kinds of olefin-based elastomers as the olefin-based elastomers included in the intermediate layer.

<<Non-woven Fabric Layer>>

Any appropriate non-woven fabric layer may be adopted as the non-woven fabric layer to the extent that the effect of the present invention is not impaired. The number of kinds of non-woven fabrics constituting the non-woven fabric layer may be only one, or may be two or more.

Examples of the non-woven fabric constituting the non-woven fabric layer include a spunbond non-woven web, a raised non-woven fabric (such as a non-woven fabric obtained by a thermal bonding method, a bonding joining method, or a spunlace method) , a melt-blown non-woven web, a spunlace non-woven web, a spunbond melt-blown spunbond non-woven web, a spunbond melt-blown melt-blown spunbond non-woven web, an unjoined non-woven web, an electrospun non-woven web, a flashspun non-woven web (such as TYVEKTM of DuPont), and a carded non-woven fabric.

The non-woven fabric constituting the non-woven fabric layer may contain polyolefin fibers, such as polypropylene, polyethylene, polyester, polyamide, polyurethane, an elastomer, rayon, cellulose, acryl, copolymers thereof, blends thereof, or mixtures thereof.

The non-woven fabric constituting the non-woven fabric layer may contain a fiber which has a uniform structure and may contain a two-component structure, such as a sheath/core structure, a side-by-side structure, a sea-island structure, or any other two-component structure. Detailed descriptions of the non-woven fabric can be found in, for example, "Nonwoven Fabric Primer and Reference Sampler, " E.A. Vaughn, Association of the Nonwoven Fabrics Industry, third edition (1992).

The basis amount of the non-woven fabric constituting the non-woven fabric layer is preferably 150 gsm or less, more preferably 100 gsm or less, still more preferably 50 gsm or less, particularly preferably from 10 gsm to 30 gsm.

<<Production of Stretchable Laminate of the Present Invention>>

In production of the stretchable laminate of the present invention, when the elastomer layer and the non-woven fabric layer are directly laminated with each other (for example, in cases of FIG. 1 and FIG. 2), the elastomer layer and the non-woven fabric layer need to be bonded to each other. Examples of such bonding method include: (1) a method involving laminating an elastomer layer formed by extrusion molding fromaT-die of an extruder and a non-woven fabric layer separately fed from a rolled body; (2) a method involving laminating an elastomer layer and a non-woven fabric layer by co-extrusion; (3) a method involving bonding an elastomer layer and a non-woven fabric layer, which are prepared separately, with an adhesive; (4) a method involving forming a non-woven fabric layer on an elastomer layer formed by any appropriate method through melt-blown method or the like; and (5) thermally laminating or ultrasonically welding an elastomer layer and a non-woven fabric layer.

The bonding of the elastomer layer and the non-woven fabric layer may be conducted with a hot-melt pressure-sensitive adhesive. When the hot-melt pressure-sensitive adhesive is used, the need to add a tackifier as a component of the elastomer layer is obviated, and hence, for example, the extrusion stability is enhanced, aproblem in that the tackifier adheres to a molding roll can be suppressed, and a contamination problem of the production line by volatile matter contamination or the like caused by the tackifier can be suppressed.

When the hot-melt pressure-sensitive adhesive is used for bonding the elastomer layer and the non-woven fabric layer, in the case of applying the method (1) described above, the non-woven fabric layer separately fed from a rolled body may be coated with the hot-melt pressure-sensitive adhesive before being laminated with the elastomer layer.

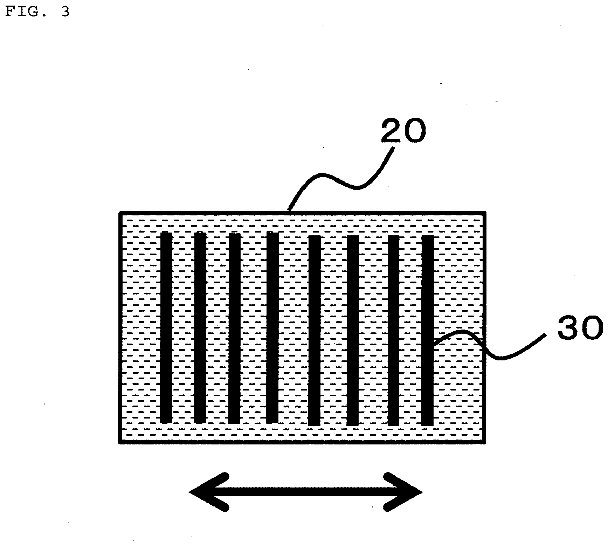

When the hot-melt pressure-sensitive adhesive is used for bonding the elastomer layer and the non-woven fabric layer, it is not necessary to coat the whole surface of the non-woven fabric layer with the hot-melt pressure-sensitive adhesive. For example, as illustrated in FIG. 3, the non-woven fabric layer 20 may be coated with a hot-melt pressure-sensitive adhesive 30 in a striped manner in a flow direction of the production line, or the hot-melt pressure-sensitive adhesive 30 may be applied onto the non-woven fabric layer 20 in a dotted manner. Through the coating with the hot-melt pressure-sensitive adhesive in a striped manner, portions in which the hot-melt pressure-sensitive adhesive is present and portions in which the hot-melt pressure-sensitive adhesive is absent are formed in a striped manner, and therefore, particularly in a direction perpendicular to the stripe pattern (in the direction of the arrow in FIG. 3), the stretchability of the stretchable laminate may be further enhanced.

The stretchable laminate of the present invention can be subjected to treatments referred to as pre-extension treatment and activation treatment after laminating the elastomer layer and the non-woven fabric layer. Specifically, extension treatment is performed in a width direction of the stretchable laminate or treatment in which a fiber structure of a part of the region of the non-woven fabric layer is mechanically broken can be performed. When such treatments are performed, the stretchable laminate can be elongated by a smaller force.

<<Application of Stretchable Laminate of the Present Invention>>

The stretchable laminate of the present invention can be used in any appropriate article in which the effect of the present invention can be effectively utilized. That is, the article of the present invention includes the stretchable laminate of the present invention. A typical example of such article is a sanitary article. Examples of such sanitary article include a diaper (particularly an ear portion of a disposal diaper), a supporter, and a mask.

Examples

The present invention is hereinafter specifically described by way of Examples. However, the present invention is by no means limited by these Examples. It should be noted that, in Examples and the like, test and evaluation methods are as described below. In addition, "part (s) " means "part (s) by weight" and "%" means "wt%" unless otherwise stated.

(Measurement of Density)

The density (g/cm$^3$) of a resin was a value measured in conformity to ASTM D1505.

(Measurement of MFR)

A MFR (g/10 min) was a value measured in conformity to ASTM D1238.

(Hysteresis Test: Measurement Method for Permanent Set)

A stretchable laminate was cut into a size of 30 mm in width and 10 cm in length so that a vertical direction (cross-machine direction (CD)) with respect to a film flow direction (machine direction (MD)) constituted a long side.

The resultant stretchable laminate was set on a tension testing machine (manufactured by Shimadzu Corporation: AG-IS 50 kN) so as to have a distance between chucks of 50 mm with a rubber plate and was subjected to a pre-extension step at a tension speed of 300 mm/min and a moving distance of 50 mm (100% extension) (The distance between the chucks was returned by 50 mm immediately after the movement of the chucks by 50 mm. At this time, the stretchable laminate was in a state in which sag corresponding to the permanent set occurred. ) .

Subsequently, the distance between the chucks was extended little by little under the same measurement conditions to move the chucks to a point at which a stress was able to be detected in a load cell (point at which the stress reached 0.1 N/30 mm) , to thereby control the sag corresponding to the permanent set (moving amount at this time was defined as permanent set: $X_0$).

The point of 0.1 N/30 mm was defined as point zero, an extension test was performed again at a moving distance of 50 mm (the distance between chucks was returned by 50 mm immediately after the movement of the chucks by 50 mm), and the first measurement was performed, followed by measuring a permanent set after the first measurement ($X_1$) in the same manner as described above. This operation was repeated a total of four times.

In the same manner described above, permanent sets ($X_2$, $X_3$, and $X_4$) were measured in the respective operations.

From the data obtained through the operations, the "permanent set after a hysteresis test is performed four times" was calculated based on the following calculation expression.

$$[(X_1+X_2+X_3+X_4)/50]\times100 \ (\%)$$

It should be noted that in the case where the stretchable laminate is subjected to a pre-extension step (activation step) in the production steps or the like, the permanent set is measured without performing the pre-extension step in the hysteresis test.

(Evaluation of Fitting Feeling)

The stretchable laminate was mounted to a stretchable body for diaper sides (a trapezoidal shape having a diaper body-side adhesion width of 7 cm and a side tape-side width of 4 cm) in a vertical direction (cross-machine direction (CD)) with respect to a film flow direction (machine direction (MD)) and a repetitive bonding property was evaluated in accordance with an actual usage environment. A bonding operation at the identical position was serially performed four times and the case where looseness caused by film extension was sensed was marked as Symbol "×", and the case where no looseness was sensed was marked as Symbol "○".

(Evaluation of Heat Resistance)

The stretchable laminate was stored for 1 week under an environment of room temperature or 40°C and a relative humidity of 92%, and then the laminate was measured at a tension rate of 300 mm/min in the same sample shape, the same testing machine, and the same distance between the chucks as the hysteresis test until the laminate was broken. The strength upon 200% extension was measured and compared to that of the product stored at room temperature. When the strength decreased by 10% or more, the laminate was marked as Symbol "×".

(Molding Conditions)

In Examples and Comparative Examples, an elastomer layer (hereinafter also referred to as elastic film) was formed by extrusion molding by extruding three layers in two types (A layer/B layer/A layer) through the use of a T-die molding machine. The extrusion temperatures were set under the following conditions.

A layer: 200°C
B layer: 200°C
Die temperature: 200°C

The extruded elastic film was bonded with the non-woven fabric onto which a hot-melt pressure-sensitive adhesive had been applied in a striped manner (pressure-sensitive adhesive layer width: 1 mm, interval: 1 mm) on a roll on both surfaces to obtain a stretchable laminate.

(Evaluation of Heat Resistance upon Molding)

When the film was formed under the molding conditions described above, in the case where a deteriorated resin referred to as die build-up was generated at a die lip portion of a T-die, the film was marked as Symbol "×", and in the case where die build-up was not generated, the film was marked as Symbol "∘".

[Example 1]

100 wt% of an olefin-based resin (manufactured by Exxon Mobil Corporation, trade name: Vistamaxx 6202, density=0.861 g/cm$^3$, MFR=18.0 g/10 min) was loaded into A layer in an extrusion machine and a formulation of 67 wt% of an olefin-based resin (manufactured by Exxon Mobil Corporation, trade name: Vistamaxx 6202, density=0.861 g/cm$^3$, MFR=18. 0 g/10 min), 30 wt% of an olefin-based resin (manufactured by Mitsui Chemicals, Inc., trade name: TAFMER PN-3560, density=0.866 g/cm$^3$, MFR=6.0 g/10 min) , and 3 wt% of a white pigment (titanium oxide, manufactured by Dupont, trade name: Ti-Pure R103) was loaded into B layer in the extrusion machine to extrude an elastic film having the construction of A layer/B layer/A layer=9 μm/42 μm/9 μm in total of 60 μm.
Then, a non-woven fabric (PP carded type, basis weight: 24 gsm) onto which an SIS-based hot-melt pressure-sensitive adhesive (manufactured by Bento Bantçilik, trade name: AC280) hadbeenapplied (30 g/m$^2$) in a striped manner (pressure-sensitive adhesive layer width: 1 mm, interval: 1 mm) was laminated, on a cooling roll of the extruded elastic film, on both surfaces of the elastic film to obtain a stretchable laminate (1).
The results are shown in Table 1.

[Example 2]

100 wt% of an olefin-based resin (manufactured by Exxon Mobil Corporation, trade name: Vistamaxx 6202, density=0.861 g/cm$^3$, MFR=18. 0 g/10 min) was loaded into A layer in an extrusion machine and a formulation of 67 wt% of an olefin-based resin (manufactured by Exxon Mobil Corporation, trade name: Vistamaxx 6202, density=0.861 g/cm$^3$, MFR=18.0 g/10 min), 30 wt% of an olefin-based resin (manufactured by Mitsui Chemicals, Inc., trade name: TAFMER PN-3560, density=0.866 g/cm$^3$, MFR=6. 0 g/10 min) , and 3 wt% of a white pigment (titanium oxide, manufacturedby Dupont, trade name: Ti-Pure R103) was loaded into B layer in the extrusion machine to extrude an elastic film having the construction of A layer/B layer/A layer=6.75 μm/31.5 μm/6.75 μm in total of 45 μm.
Then, a non-woven fabric (PP carded type, basis weight: 24 gsm) onto which an SIS-based hot-melt pressure-sensitive adhesive (manufactured by Bento Bantçilik, tradename: AC280) hadbeenapplied (30 g/m$^2$) in a striped manner (pressure-sensitive adhesive layer width: 1 mm, interval: 1 mm) was laminated, on a cooling roll of the extruded elastic film, on both surfaces of the elastic film to obtain a stretchable laminate (2).
The results are shown in Table 1.

[Example 3]

100 wt% of an olefin-based resin (manufactured by Exxon Mobil Corporation, trade name: Vistamaxx 6202, density=0.861 g/cm$^3$, MFR=18.0 g/10 min) was loaded into A layer in an extrusion machine and a formulation of 47 wt% of an olefin-based resin (manufactured by Exxon Mobil Corporation, trade name: Vistamaxx 6202, density=0.861 g/cm$^3$, MFR=18. 0 g/10 min), 50 wt% of an olefin-based resin (manufactured by Mitsui Chemicals, Inc., trade name: TAFMER PN-3560, density=0.866 g/cm$^3$, MFR=6. 0 g/10 min) , and 3 wt% of a white pigment (titanium oxide, manufactured by Dupont, trade name: Ti-Pure R103) was loaded into B layer in the extrusion machine to extrude an elastic film having the construction of A layer/B layer/A layer=9 μm/42 μm/9 μm in total of 60 μm.
Then, a non-woven fabric (PP carded type, basis weight: 24 gsm) onto which an SIS-based hot-melt pressure-sensitive adhesive (manufactured by Bento Bantçilik, tradename: AC280) had been applied (30 g/m$^2$) in a striped manner (pressure-sensitive adhesive layer width: 1 mm, interval: 1 mm) was laminated, on a cooling roll of the extruded elastic film, on both surfaces of the elastic film to obtain a stretchable laminate (3).
The results are shown in Table 1.

[Example 4]

100 wt% of an olefin-based resin (manufactured by Exxon Mobil Corporation, trade name: Vistamaxx 6202, density=0.861 g/cm$^3$, MFR=18.0 g/10 min) was loaded into A layer in an extrusion machine and a formulation of 27 wt% of an olefin-based resin (manufactured by Exxon Mobil Corporation, trade name: Vistamaxx 6202, density=0.861 g/cm$^3$, MFR=18.0 g/10 min), 70 wt% of an olefin-based resin (manufactured by Mitsui Chemicals, Inc., trade name: TAFMER PN-3560, density=0 . 866 g/cm$^3$, MFR=6 . 0 g/10 min) , and 3 wt% of a white pigment (titanium oxide, manufactured by Dupont, trade name: Ti-Pure R103) was loaded into B layer in the extrusion machine to extrude an elastic film having the construction of A layer/B layer/A layer=9 μm/42 μm/9 μm in total of 60 μm.
Then, a non-woven fabric (PP carded type, basis weight: 24 gsm) onto which an SIS-based hot-melt pressure-sensitive adhesive (manufactured by Bento Bantçilik, trade name: AC280) had been applied (30 g/m$^2$) in a striped

manner (pressure-sensitive adhesive layer width: 1 mm, interval: 1 mm) was laminated, on a cooling roll of the extruded elastic film, on both surfaces of the elastic film to obtain a stretchable laminate (4).

The results are shown in Table 1.

[Example 5]

A formulation of 67 wt% of an olefin-based resin (manufactured by Exxon Mobil Corporation, trade name: Vistamaxx 6202, density=0.861 g/cm$^3$, MFR=18.0 g/10 min), 30 wt% of an olefin-based resin (manufactured by Mitsui Chemicals, Inc., trade name: TAFMER PN-3560, density=0.866 g/cm$^3$, MFR=6.0 g/10 min) , and 3 wt% of a white pigment (titanium oxide, manufactured by Dupont, trade name: Ti-Pure R103) was loaded into A layer and B layer in an extrusion machine to extrude an elastic film having the construction of A layer/B layer/A layer=9 $\mu$m/42 $\mu$m/9 $\mu$m in total of 60 $\mu$m.

Then, a non-woven fabric (PP carded type, basis weight: 24 gsm) onto which an SIS-based hot-melt pressure-sensitive adhesive (manufactured by Bento Bantçilik, trade name: AC280) hadbeenapplied (30 g/m$^2$) in a striped manner (pressure-sensitive adhesive layer width: 1 mm, interval: 1 mm) was laminated, on a cooling roll of the extruded elastic film, on both surfaces of the elastic film to obtain a stretchable laminate (5).

The results are shown in Table 1.

[Example 6]

A formulation of 27 wt% of an olefin-based resin (manufactured by Exxon Mobil Corporation, trade name: Vistamaxx 6202, density=0.861 g/cm$^3$, MFR=18. 0 g/10 min), 70 wt% of an olefin-based resin (manufactured by Mitsui Chemicals, Inc., trade name: TAFMER PN-3560, density=0.866 g/cm$^3$, MFR=6. 0 g/10 min) , and 3 wt% of a white pigment (titanium oxide, manufactured by Dupont, trade name: Ti-Pure R103) was loaded into A layer and B layer in an extrusion machine to extrude an elastic film having the construction of A layer/B layer/A layer=9 $\mu$m/42 $\mu$m/9 $\mu$m in total of 60 $\mu$m.

Then, a non-woven fabric (PP carded type, basis weight: 24 gsm) onto which an SIS-based hot-melt pressure-sensitive adhesive (manufactured by Bento Bantçilik, trade name: AC280) hadbeenapplied (30 g/m$^2$) in a striped manner (pressure-sensitive adhesive layer width: 1 mm, interval: 1 mm) was laminated, on a cooling roll of the extruded elastic film, on both surfaces of the elastic film to obtain a stretchable laminate (6).

The results are shown in Table 1.

[Example 7]

100 wt% of an olefin-based resin (manufactured by Exxon Mobil Corporation, trade name: Vistamaxx 6202, density=0.861 g/cm$^3$, MFR=18.0 g/10 min) was loaded into A layer in an extrusion machine and a formulation of 67 wt% of an olefin-based resin (manufactured by Exxon Mobil Corporation, trade name: Vistamaxx 6202, density=0.861 g/cm$^3$, MFR=18.0 g/10 min), 30 wt% of an olefin-based resin (manufactured by Exxon Mobil Corporation, trade name: Vistamaxx 3980FL, density=0.879 g/cm$^3$, MFR=8.3 g/10 min) , and 3 wt% of a white pigment (titanium oxide, manufactured by Dupont, trade name: Ti-Pure R103) was loaded into B layer in the extrusion machine to extrude an elastic film having the construction of A layer/B layer/A layer=9 $\mu$m/42 $\mu$m/9 $\mu$m in total of 60 $\mu$m.

Then, a non-woven fabric (PP carded type, basis weight: 24 gsm) onto which an SIS-based hot-melt pressure-sensitive adhesive (manufactured by Bento Bantçilik, trade name: AC280) hadbeenapplied (30 g/m$^2$) in a striped manner (pressure-sensitive adhesive layer width: 1 mm, interval: 1 mm) was laminated, on a cooling roll of the extruded elastic film, on both surfaces of the elastic film to obtain a stretchable laminate (7).

The results are shown in Table 1.

[Example 8]

100 wt% of an olefin-based resin (manufactured by Exxon Mobil Corporation, trade name: Vistamaxx 6202, density=0.861 g/cm$^3$, MFR=18.0 g/10 min) was loaded into A layer in an extrusion machine and a formulation of 67 wt% of an olefin-based resin (manufactured by Exxon Mobil Corporation, trade name: Vistamaxx 6202, density=0.861 g/cm$^3$, MFR=18. 0 g/10 min), 30 wt% of an olefin-based resin (manufactured by Exxon Mobil Corporation, trade name: Vistamaxx 3980FL, density=0.879 g/cm$^3$, MFR=8.3 g/10 min), and 3 wt% of a white pigment (titanium oxide, manufactured by Dupont, trade name: Ti-Pure R103) was loaded into B layer in the extrusion machine to extrude an elastic film having the construction of A layer/B layer/A layer=6.75 $\mu$m/31.5 $\mu$m/6.75 $\mu$m in total of 45 $\mu$m.

Then, a non-woven fabric (PP carded type, basis weight: 24 gsm) onto which an SIS-based hot-melt pressure-sensitive adhesive (manufactured by Bento Bantçilik, tradename: AC280) had been applied (30 g/m$^2$) in a striped manner (pressure-sensitive adhesive layer width: 1 mm, interval: 1 mm) was laminated, on a cooling roll of the extruded elastic film, on both surfaces of the elastic film to obtain a stretchable laminate (8).

The results are shown in Table 1.

[Reference Example 9 (not in accordance with the present invention)]

A formulation of 97 wt% of an SIS-based resin (manufactured by ZEON CORPORATION, trade name: Quintac 3390, styrene content=48%, MFR=15.0 g/10 min) and 3 wt% of a white pigment (titanium oxide, manufactured by Dupont, trade name: Ti-Pure R103) was loaded into A layer and B layer in an extrusion machine to extrude an elastic film having the construction of A layer/B layer/A layer=9 $\mu$m/42 $\mu$m/9 $\mu$m in total of 60 $\mu$m.

Then, a non-woven fabric (PP carded type, basis weight: 24 gsm) onto which an SIS-based hot-melt pressure-sensitive adhesive (manufactured by Bento Bantçilik, trade name: AC280) had been applied (30 g/m$^2$) in a striped manner (pressure-sensitive adhesive layer width: 1 mm, interval: 1 mm) was laminated, on a cooling roll of the extruded elastic film, on both surfaces of the elastic film to obtain a stretchable laminate (9).

The results are shown in Table 2.

[Reference Example 10 (not in accordance with the present invention)]

A formulation of 97 wt% of an SIS-based resin (manufactured by ZEON CORPORATION, trade name: Quintac 3620, styrene content=14%, MFR=9.0 g/10 min) and 3 wt% of a white pigment (titanium oxide, manufactured by Dupont, trade name: Ti-Pure R103) was loaded into A layer and B layer in an extrusion machine to extrude an elastic film having the construction of A layer/B layer/A layer=9 $\mu$m/42 $\mu$m/9 $\mu$m in total of 60 $\mu$m.

Then, a non-woven fabric (PP carded type, basis weight: 24 gsm) onto which an SIS-based hot-melt pressure-sensitive adhesive (manufactured by Bento Bantçilik, trade name: AC280) had been applied (30 g/m$^2$) in a striped manner (pressure-sensitive adhesive layer width: 1 mm, interval: 1 mm) was laminated, on a cooling roll of the extruded elastic film, on both surfaces of the elastic film to obtain a stretchable laminate (10).

The results are shown in Table 2.

[Reference Example 11 (not in accordance with the present invention)]

A formulation of 97 wt% of an SEBS-based resin (manufactured by Asahi Kasei Chemicals Corp., trade name: Tuftec H1041, styrene content: 30%, MFR=5.0 g/10 min) and 3 wt% of a white pigment (titanium oxide, manufactured by Dupont, trade name: Ti-Pure R103) was loaded into A layer and B layer in an extrusion machine to extrude an elastic film having the construction of A layer/B layer/A layer=9 $\mu$m/42 $\mu$m/9 $\mu$m in total of 60 $\mu$m.

Then, a non-woven fabric (PP carded type, basis weight: 24 gsm) onto which an SIS-based hot-melt pressure-sensitive adhesive (manufactured by Bento Bantçilik, trade name: AC280) hadbeenapplied (30 g/m$^2$) in a striped manner (pressure-sensitive adhesive layer width: 1 mm, interval: 1 mm) was laminated, on a cooling roll of the extruded elastic film, on both surfaces of the elastic film to obtain a stretchable laminate (11).

The results are shown in Table 2.

[Comparative Example 1]

A formulation of 97 wt% of an SEBS-based resin (manufactured by JSR Corporation, trade name: DYNARON 8600P, styrene content=15%, MFR=30.0 g/10 min) and 3 wt% of a white pigment (titanium oxide, manufactured by Dupont, trade name: Ti-Pure R103) was loaded into A layer and B layer in an extrusion machine to extrude an elastic film having the construction of A layer/B layer/A layer=9 $\mu$m/42 $\mu$m/9 $\mu$m in total of 60 $\mu$m.

Then, a non-woven fabric (PP carded type, basis weight: 24 gsm) onto which an SIS-based hot-melt pressure-sensitive adhesive (manufactured by Bento Bantçilik, trade name: AC280) hadbeenapplied (30 g/m$^2$) in a striped manner (pressure-sensitive adhesive layer width: 1 mm, interval: 1 mm) was laminated, on a cooling roll of the extruded elastic film, on both surfaces of the elastic film to obtain a stretchable laminate (C1).

The results are shown in Table 2.

[Comparative Example 2]

A formulation of 97 wt% of an SEBS-based resin (manufactured by Asahi Kasei Chemicals Corp., trade name: Tuftec H1051, styrene content=67%, MFR=2.0 g/10 min) and 3 wt% of a white pigment (titanium oxide, manufactured by Dupont, trade name: Ti-Pure R103) was loaded into A layer and B layer in an extrusion machine to extrude an elastic film having the construction of A layer/B layer/A layer=9 $\mu$m/42 $\mu$m/9 $\mu$m in total of 60 $\mu$m.

Then, a non-woven fabric (PP carded type, basis weight: 24 gsm) onto which an SIS-based hot-melt pressure-sensitive adhesive (manufactured by Bento Bantçilik, tradename: AC280) had been applied (30 g/m$^2$) in a striped manner (pressure-sensitive adhesive layer width: 1 mm, interval: 1 mm) was laminated, on a cooling roll of the extruded elastic film, on both surfaces of the elastic film to obtain a stretchable laminate (C2).

The results are shown in Table 2.

[Comparative Example 3]

A formulation of 97 wt% of an olefin-based resin (manufactured by Japan Polypropylene Corporation, trade name: WINTEC WFX4, density=0.900 g/cm$^3$, MFR=7. 0 g/10 min) and 3 wt% of a white pigment (titanium oxide, manufactured by Dupont, trade name: Ti-Pure R103) was loaded into A layer and B layer in an extrusion machine to extrude an elastic film having the construction of A layer/B layer/A layer=9 $\mu$m/42 $\mu$m/9 $\mu$m in total of 60 $\mu$m.

Then, a non-woven fabric (PP carded type, basis weight: 24 gsm) onto which an SIS-based hot-melt pressure-sensitive adhesive (manufactured by Bento Bantçilik, trade name: AC280) had been applied (30 g/m$^2$) in a striped manner (pressure-sensitive adhesive layer width: 1 mm, interval: 1 mm) was laminated, on a cooling roll of the extruded elastic film, on both surfaces of the elastic film to obtain a stretchable laminate (C3).

The results are shown in Table 2.

[Comparative Example 4]

A formulation of 97 wt% of an olefin-based resin (manufactured by Japan Polypropylene Corporation, trade name: WELNEX RFGV 4A, density=0.890 g/cm$^3$, MFR=6. 0 g/10 min) and 3 wt% of a white pigment (titanium oxide, manufactured by Dupont, trade name: Ti-Pure R103) was loaded into A layer and B layer in an extrusion machine to extrude an elastic film having the construction of A layer/B layer/A layer=9 $\mu$m/42 $\mu$m/9 $\mu$m in total of 60 $\mu$m.

Then, a non-woven fabric (PP carded type, basis weight: 24 gsm) onto which an SIS-based hot-melt pressure-sensitive adhesive (manufactured by Bento Bantçilik, tradename: AC280) hadbeenapplied (30 g/m$^2$) in a striped manner (pressure-sensitive adhesive layer width: 1 mm, interval: 1 mm) was laminated, on a cooling roll of the extruded elastic film, on both surfaces of the elastic film to obtain a stretchable laminate (C4).

The results are shown in Table 2.

[Comparative Example 5]

A formulation of 97 wt% of an EVA-based resin (manufactured byDuPont-Mitsui Polychemicals Co., Ltd. , trade name: EVAFLEX P-1007, density=930 g/cm$^3$, MFR=9.0 g/10 min: JIS K7210-1999, 190°C, 2.16 kgw) and 3 wt% of a white pigment (titanium oxide, manufactured by Dupont, trade name: Ti-Pure R103) was loaded into A layer and B layer in an extrusion machine to extrude an elastic film having the construction of A layer/B layer/A layer=9 $\mu$m/42 $\mu$m/9 $\mu$m in total of 60 $\mu$m.

Then, a non-woven fabric (PP carded type, basis weight: 24 gsm) onto which an SIS-based hot-melt pressure-sensitive adhesive (manufactured by Bento Bantçilik, trade name: AC280) had been applied (30 g/m$^2$) in a striped manner (pressure-sensitive adhesive layer width: 1 mm, interval: 1 mm) was laminated, on a cooling roll of the extruded elastic film, on both surfaces of the elastic film to obtain a stretchable laminate (C5).

The results are shown in Table 2.

[Table 1]

| | | Examples | | | | | | | |
|---|---|---|---|---|---|---|---|---|---|
| | | 1 | 2 | 3 | 4 | 5 | 6 | 7 | 8 |
| A layer resin | | Vistamaxx 6202 | ← | ← | ← | The same formulatio n as B layer | The same formulatio n as B layer | Vistamaxx 6202 | ← |
| B layer resin (1) | | Vistamaxx 6202 | ← | ← | ← | ← | ← | ← | ← |
| B layer resin (2) | | TAFMER PN-3560 | ← | ← | ← | ← | ← | Vistamaxx 3980FL | |
| B layer resin (3) | | TiO2 | ← | ← | ← | ← | ← | ← | ← |
| B layer formulation (1) / (2) / (3) | | 67/30/3 | ← | 47/50/3 | 27/70/3 | 67/30/3 | 27/70/3 | 67/30/3 | ← |
| Thickness of A/B/A | μm | 9/42/9 | 6.75/31.5/ 6.75 | 9/42/9 | 9/42/9 | 9/42/9 | 9/42/9 | 9/42/9 | 6.75/31.5/ 6.75 |
| Total thickness of elastic film | μm | 60 | 45 | 60 | 60 | 60 | 60 | 60 | 45 |
| Type of hot-melt pressure-sensitiv e adhesive | | AC280 | AC280 | AC280 | AC280 | AC280 | AC280 | AC280 | AC280 |
| Type of non-woven fabric | | Carded 24 g/m² | Carded 24 g/m² | Carded 24 g/m² | Carded 24 g/m² | Carded 24 g/m² | Carded 24 g/m² | Carded 24 g/m² | Carded 24 g/m² |
| | | | | | | | | | |
| Permanent set ratio | % | 4.4 | 5 | 4 | 3.9 | 3.8 | 3.6 | 6.5 | 8.6 |
| Fitting feeling | - | ○ | ○ | ○ | ○ | ○ | ○ | ○ | ○ |
| Heat resistance RT×1-week storage Strength upon 200% extension | N/30 mm | 16.1 | 14.6 | 17.2 | 17.3 | 17.5 | 17.5 | 20.4 | 18.9 |
| Heat resistance 40°C×92%RH×1-week storage Strength upon 200% extension | N/30 mm | 15.6 | 13.3 | 16.7 | 16.9 | 16.6 | 16.9 | 20.2 | 18.6 |
| Heat resistance decreasing rate | % | 3.1 | 8.8 | 2.9 | 2.3 | 5.1 | 3.4 | 1 | 1.6 |
| Evaluation of heat resistance | - | ○ | ○ | ○ | ○ | ○ | ○ | ○ | ○ |
| Evaluation of heat resistance upon molding | - | ○ | ○ | ○ | ○ | ○ | ○ | ○ | ○ |

[Table 2]

| | | Reference Examples | | | Comparative Examples | | | | |
|---|---|---|---|---|---|---|---|---|---|
| | | 9 | 10 | 11 | C1 | C2 | C3 | C4 | C5 |
| A layer resin | | Quintac 3390 | Quintac 3620 | Tuftec H1041 | Dynaron 8600P | Tuftec H1051 | Wintec WFX4 | Welnex RFG4VA | Evaflex P-1007 |
| B layer resin (1) | | Quintac 3390 | Quintac 3620 | Tuftec H1041 | Dynaron 8600P | Tuftec H1051 | Wintec WFX4 | Welnex RFG4VA | Evaflex P-1007 |
| B layer resin (2) | | TiO2 | ← | ← | ← | ← | ← | ← | ← |
| B layer formulation (1) / (2) | | 97/3 | ← | ← | ← | ← | ← | ← | ← |
| Thickness of A/B/A | $\mu$m | 9/42/9 | 9/42/9 | 9/42/9 | 9/42/9 | 9/42/9 | 9/42/9 | 9/42/9 | 9/42/9 |
| Total thickness of elastic film | $\mu$m | 60 | 45 | 60 | 60 | 60 | 60 | 60 | 60 |
| Type of hot-melt pressure-sensitiv e adhesive | | AC280 | AC280 | AC280 | AC280 | AC280 | AC280 | AC280 | AC280 |
| Type of non-woven fabric | | Carded 24 g/m$^2$ | Carded 24 g/m$^2$ | Carded 24 g/m$^2$ | Carded 24 g/m$^2$ | Carded 24 g/m$^2$ | Carded 24 g/m$^2$ | Carded 24 g/m$^2$ | Carded 24 g/m$^2$ |
| | | | | | | | | | |
| Permanent set ratio | % | 2.6 | 6.8 | 8.4 | 10.5 | 10.3 | 13.5 | 12.5 | 10.4 |
| Fitting feeling | - | ○ | ○ | ○ | × | × | × | × | × |
| Heat resistance RT×1-week storage Strength upon 200% extension | N/30 mm | 14.8 | 10.5 | 12.8 | 14.7 | 17.4 | 21.5 | 16.4 | 10.3 |
| Heat resistance 40°C×92%RH×1-week storage Strength upon 200% extension | N/30 mm | 13.9 | 9 | 12.3 | 13.9 | 16.5 | 21.2 | 16.2 | 9.7 |
| Heat resistance decreasing rate | % | 6.1 | 14.2 | 3.9 | 5.4 | 5.2 | 1.4 | 1.2 | 5.8 |
| Evaluation of heat resistance | - | ○ | × | ○ | ○ | ○ | ○ | ○ | ○ |
| Evaluation of heat resistance upon molding | - | × | × | ○ | ○ | ○ | ○ | ○ | ○ |

Industrial Applicability

The stretchable laminate of the present invention may be used in any appropriate article in which the effect of the present invention can be effectively utilized. That is, the article of the present invention includes the stretchable laminate of the present invention. A typical example of such article is a sanitary article. Examples of such sanitary article include a diaper (particularly, an ear portion of a disposal diaper), a supporter, and a mask.

Reference Signs List

100    stretchable laminate
10     elastomer layer
20     non-woven fabric layer
20a    non-woven fabric layer
20b    non-woven fabric layer
30     hot-melt pressure-sensitive adhesive

**Claims**

1.  A stretchable laminate, comprising:

    an elastomer layer; and
    a non-woven fabric layer arranged on at least one side of the elastomer layer,
    the stretchable laminate having a permanent set after a hysteresis test as defined in the description is performed four times of 10% or less,
    wherein the elastomer layer comprises an elastomer resin as a main component, and the content of the elastomer resin in the elastomer layer is from 90 wt% to 100 wt%,
    wherein the elastomer layer is an elastic film,
    wherein the elastomer layer comprises an olefin-based elastomer, and
    wherein the olefin-based elastomer has a MFR of from 5.0 g/10 min to 25.0 g/10 min, measured in conformity to ASTM D1238.

2.  The stretchable laminate according to claim 1, wherein the olefin-based elastomer has a density of from 0.890 g/cm$^3$ to 0.830 g/cm$^3$, measured in conformity to ASTM D1505

3.  The stretchable laminate according to claim 1 or 2, wherein the olefin-based elastomer comprises an $\alpha$-olefin-based elastomer.

4.  The stretchable laminate according to claim 3, wherein the $\alpha$-olefin-based elastomer comprises any one selected from an ethylene-based elastomer, a propylene-based elastomer, and a 1-butene-based elastomer.

5.  The stretchable laminate according to claim 4, wherein the $\alpha$-olefin-based elastomer comprises a propylene-based elastomer.

6.  The stretchable laminate according to any one of claims 3 to 5, wherein the $\alpha$-olefin-based elastomer is produced by using a metallocene catalyst.

7.  The stretchable laminate according to any one of claims 1 to 6, wherein the olefin-based elastomer comprises a blend of two or more kinds of olefin-based elastomers.

8.  An article, comprising the stretchable laminate of any one of claims 1 to 7.

**Patentansprüche**

1.  Dehnbares Laminat, umfassend:

EP 3 023 247 B1

eine Elastomerschicht; und

eine auf mindestens einer Seite der Elastomerschicht angeordnete Vliesstoffschicht,

wobei das dehnbare Laminat nach viermaliger Durchführung eines Hysteresetests, wie in der Beschreibung definiert, eine bleibende Verformung von 10% oder weniger aufweist,

wobei die Elastomerschicht ein Elastomerharz als eine Hauptkomponente umfasst und der Gehalt des Elastomerharzes in der Elastomerschicht 90 Gew.-% bis 100 Gew.-% beträgt,

wobei die Elastomerschicht eine elastische Folie ist,

wobei die Elastomerschicht ein Elastomer auf Olefinbasis umfasst, und

wobei das Elastomer auf Olefinbasis eine MFR, gemessen in Übereinstimmung mit ASTM D1238, von 5,0 g/10 min bis 25,0 g/10 min aufweist.

2. Dehnbares Laminat nach Anspruch 1, wobei das Elastomer auf Olefinbasis eine Dichte, gemessen in Übereinstimmung mit ASTM D1505, von 0,890 g/cm$^3$ bis 0,830 g/cm$^3$ aufweist.

3. Dehnbares Laminat nach Anspruch 1 oder 2, wobei das Elastomer auf Olefinbasis ein Elastomer auf $\alpha$-Olefinbasis umfasst.

4. Dehnbares Laminat nach Anspruch 3, wobei das Elastomer auf $\alpha$-Olefinbasis eines, ausgewählt aus einem Elastomer auf Ethylenbasis, einem Elastomer auf Propylenbasis und einem Elastomer auf 1-Butenbasis, umfasst.

5. Dehnbares Laminat nach Anspruch 4, wobei das Elastomer auf $\alpha$-Olefinbasis ein Elastomer auf Propylenbasis umfasst.

6. Dehnbares Laminat nach einem der Ansprüche 3 bis 5, wobei das Elastomer auf $\alpha$-Olefinbasis unter Verwendung eines Metallocenkatalysators hergestellt wird.

7. Dehnbares Laminat nach einem der Ansprüche 1 bis 6, wobei das Elastomer auf Olefinbasis eine Mischung aus zwei oder mehr Arten von Elastomeren auf Olefinbasis umfasst.

8. Gegenstand, umfassend das dehnbare Laminat nach einem der Ansprüche 1 bis 7.

**Revendications**

1. Laminé extensible, comprenant :

une couche d'élastomère; et

une couche de tissu non tissé disposée sur au moins un côté de la couche d'élastomère,

le laminé extensible présentant un durcissement permanent après qu'un test d'hystérésis tel que défini dans la description a été réalisé quatre fois de 10% ou moins,

dans lequel la couche d'élastomère comprend une résine d'élastomère comme composant principal et la teneur en résine d'élastomère dans la couche d'élastomère va de 90% en poids à 100% en poids,

dans lequel la couche d'élastomère est un film élastique,

dans lequel la couche d'élastomère comprend un élastomère à base d'oléfine, et dans lequel l'élastomère à base d'oléfine a un MFR allant de 5,0 g/10 min à 25,0 g/10 min, mesuré en conformité avec la norme ASTM D1238.

2. Laminé extensible selon la revendication 1, dans lequel l'élastomère à base d'oléfine présente une densité allant de 0,890 g/cm$^3$ à 0,830 g/cm$^3$, mesurée en conformité avec le norme ASTM D1505.

3. Laminé extensible selon la revendication 1 ou 2, dans lequel l'élastomère à base d'oléfine comprend un élastomère à base d'$\alpha$-oléfine.

4. Laminé extensible selon la revendication 3, dans lequel l'élastomère à base d'a-oléfine comprend au moins l'un sélectionné parmi un élastomère à base d'éthylène, un élastomère à base de propylène et un élastomère à base de 1-butène.

5. Laminé extensible selon la revendication 4, dans lequel l'élastomère à base d'a-oléfine comprend un élastomère à base de propylène.

6.  Laminé extensible selon l'une quelconque des revendications 3 à 5, dans lequel l'élastomère à base d'a-oléfine est produit en utilisant un catalyseur métallocène.

7.  Laminé extensible selon l'une quelconque des revendications 1 à 6, dans lequel l'élastomère à base d'oléfine comprend un mélange de deux sortes, ou plus, d'élastomères à base d'oléfine.

8.  Article comprenant le laminé extensible selon l'une quelconque des revendications 1 à 7.

FIG. 1

FIG. 2

100

20a
10
20b

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012187857 A
- JP 3830818 B
- US 2009264844 A1
- US 2010081352 A1
- US 2010222755 A1